Europäisches Patentamt

European Patent Office

Office européen des brevets

(11) Publication number: **0 085 359**
**B1**

(12) **EUROPEAN PATENT SPECIFICATION**

(45) Date of publication of patent specification: **23.04.86**

(51) Int. Cl.⁴: **G 01 F 23/36**

(21) Application number: **83100455.1**

(22) Date of filing: **20.01.83**

(54) Electrical level measuring transducer.

(30) Priority: **30.01.82 DE 3203110**

(43) Date of publication of application:
**10.08.83 Bulletin 83/32**

(45) Publication of the grant of the patent:
**23.04.86 Bulletin 86/17**

(84) Designated Contracting States:
**AT BE CH DE FR GB IT LI NL SE**

(56) References cited:
**DE-A-1 957 121**
**DE-A-2 234 861**
**DE-A-2 627 556**
**DE-A-2 627 865**
**DE-A-3 013 857**
**DE-B-2 627 253**

(73) Proprietor: **Sunvic Regler GmbH**
**Albertus-Magnus-Strasse 11**
**D-5650 Solingen-Wald (DE)**

(72) Inventor: **Dombrowski, Ferdinand**
**Auf dem Kämmchen 25**
**D-5650 Solingen 11 (DE)**
Inventor: **Förster, Dieter**
**Diekerstrasse 52**
**D-5657 Haan 1 (DE)**

(74) Representative: **Weisse, Jürgen, Dipl.-Phys.**
**et al**
**Bökenbusch 41 Postfach 11 03 86**
**D-5620 Velbert 11-Langenberg (DE)**

Courier Press, Leamington Spa, England.

## Description

The invention relates to an electrical level measuring transducer for generating a signal representing the liquid level inside a container, comprising

(a) a float to be disposed in the interior of the container,

(b) means for converting the upward thrust acting on the float into a movement,

(c) permanent magnet means arranged to be moved by the upward thrust converting means, and

(d) a Hall generator disposed in the region of movement of the permanent magnet means for generating an electric signal indicative of said movement.

Such an electrical level measuring transducer is known from DE—A—2,627,865. The publication discloses a liquid level transducer, in which a float is connected to a permanent magnet and the magnet is movable relative to a Hall effect position measurement transducer (Hall generator). To this end the float is attached at the end of a lever which is mounted for rotation about an axis.

A permanent magnet is connected to the lever such that it rotates about the axis, when the lever is moved by the float. The magnet has a North pole on one side of the axis and has a South pole on the diametrically opposite side of the axis. The Hall generator is located adjacent the magnet, whereby the magnetic flux through the Hall generator is varied as a function of the movement of the lever and thus of the upward thrust acting on the float due to buoyancy. In another embodiment of DE—A—2,627,865 the float is attached to one arm of a two-armed lever, and the permanent magnet is attached to the other arm. In a third embodiment the magnet is moved along a rectilinear path. The use of a Hall generator for generating the signal is to secure spark free operation which is safe in an explosive environment.

In another prior art measuring transducer (DE—A—2,627,556), a bending body clamped on one side to a base body and carrying strain gages is provided as movement converting means. The buoyancy converting means comprise a pivotable lever which is pivoted on the base body and connected to the free end of the bending body, and upon which the buoyancy is acting to flex the bending body. To this end, a two-armed force transmitting lever is provided which is connected to a stiff diaphragm in the middle. This diaphragm is mounted in a housing flange and forms the pivot of the force transmitting lever. A float on which buoyancy will act is attached to the arm of the force transmitting lever projecting into a container. A thrust transmitting piece is guided for longitudinal movement on the other arm of the force transmitting lever, which thrust piece engages the pivotable lever non-positively. DE—A—2,627,556 also discloses a tightly closed housing which contains signal processing means for processing signals from the strain gages.

A measuring transducer having strain gages is expensive. Additionally, problems of the protection against explosion may arise requiring additional and expensive measures.

From DE—B—2,627,253, a level signal transmitter is known in which a disc-shaped flange is adapted to be attached to a container, which flanges closes an aperture in the container wall. At least partly, the flange is made of non-magnetic material. On its inside, it has a pair of bearing supports extending perpendicular with respect to the flange. A two-armed lever is pivoted between the bearing supports. The two-armed lever carries a float at its end remote from the flange, and a magnet on its flange end. A reed-switch comprising a vessel filled with inert gas is disposed in a radial bore of the flange and is adapted to be actuated by the magnet through the non-magnetic material.

Such a level signal transmitter supplies a yes-no-signal only, that means, it only indicates whether a given level has been exceeded or not.

DE—A—2,234,861 discloses a measuring and switching device for the measurement of liquid levels. The liquid is contained in a container. A two-armed lever is pivoted inside this container. A float is attached to one arm of this lever. The other arm carries a permanent magnet. A tube of non-magnetic material and closed at its inner end extends through the wall of the container into the interior of the container. A reed switch is arranged inside this tube. This reed switch is actuated by the magnet, when the float has been moved up by the liquid to a certain position and thus a certain liquid level has been reached.

Hall generators using a pair of permanent bar magnets which are secured to a holder and spaced to define an air gap therebetween are disclosed in DE—A—3,013,857.

It is the object of the invention to provide a simple and inexpensive electrical level measuring transducer which supplies a continuous level signal.

According to the invention, this object is achieved with an electrical measuring transducer as stated at the outset in that

(e) a tightly closed housing contains signal processing means for processing signals from said Hall generator,

(f) said housing has a non-magnetic wall portion which forms a hollow body protruding outwards from the wall of the housing,

(g) the Hall generator is arranged in said hollow body,

(h) the permanent magnet means comprise an arrangement of a pair of permanent bar magnets, which are secured to a holder and spaced to define an air gap therebetween, the arrangement being such that, at a first end, the North pole of one permanent magnet is opposite to the South pole of the other permanent magnet and, at a second end, the South pole of said one permanent magnet is opposite to the North pole of the other permanent magnet, and

(i) the hollow body and the Hall generator arranged therein extend into the air gap defined between the permanent magnets, and the permanent magnet means are arranged to be moved over the hollow body and Hall generator, the movement being in the direction from said first end to said second end or vice versa.

It has been found that with such an arrangement of the magnet means and Hall generator the useful signal from the Hall generator can be made higher than with an arrangement comprising one single magnet only, whereby high signal-to-noise ratio is achieved. Also linearity of the signal as a function of liquid level can be achieved within a rather large range. All electric components are contained with a tightly closed housing. Thus the signal is not only generated by contact-free components, as in DE—A—2,627,865, but there are no electric components at all which could be exposed to explosive gases.

An embodiment of the invention will be described in greater detail hereinbelow with reference to the accompanying drawings.

Fig. 1 is a perspective view of an electrical level measuring transducer.

Fig. 2 is a schematic illustration of the measuring transducer.

Fig.3 is a wiring diagram of the measuring transducer.

Fig. 4 is a schematic illustration of the magnet assembly.

Fig. 5 shows the variation of the flux density B effective on the Hall generator as a function of the displacement s of the magnet assembly.

Fig. 6 is a vertical sectional view of a constructional design of the measuring transducer.

Fig. 7 shows a side elevation, partly in section, of the magnets and the Hall generator.

Fig. 8 is a sectional view taken along line VIII—VIII of Fig. 7.

The measuring converter for level comprises a vertical cylinder 10 closed at the top, which has a flange 12 tightly screwed by means of threaded bolts to a container to be monitored. In the cylinder 10, a float 132 is suspended vertically movably. The float 132 is suspended from a lever 134 extending transverse to the axis of the cylinder 10, which lever is rotated with the up and down movement of the float 132 caused by the buoyancy. This rotating movement is transformed into a rotating movement of a rod 136. This rotation is transmitted out of the chamber under pressure of the container by means of a torsion tube. This design is known per se and therefore is not described in detail here.

The rod 136 coaxially projects into a substantially cylindrical housing 162. The axis of the housing 162 extends substantially horizontally and laterally offset relative to the axis of the vertical cylinder 10. On the end face 22 of the housing 162, an indicating instrument 24 for the level is visible.

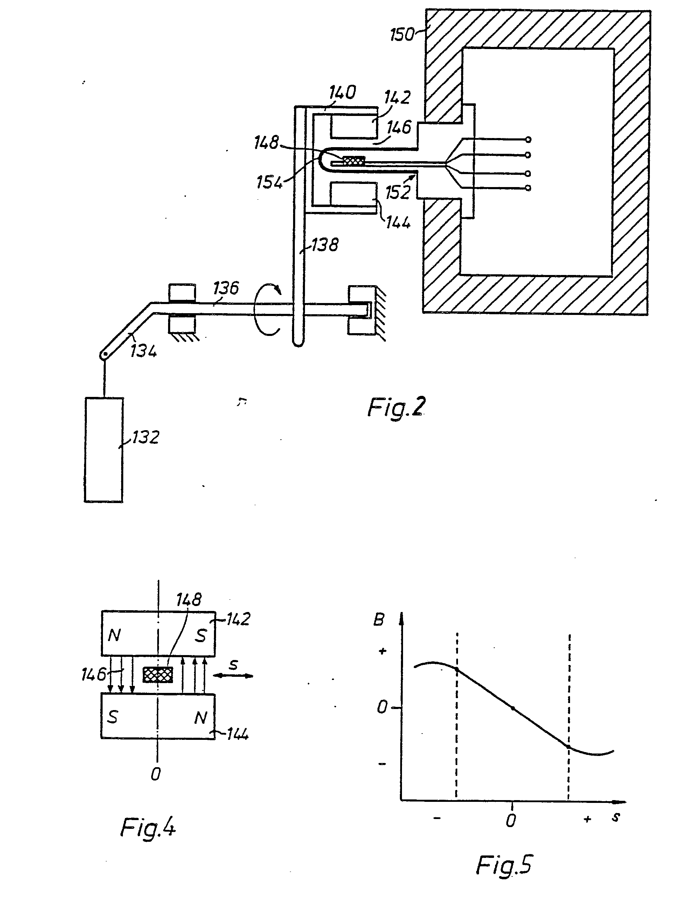

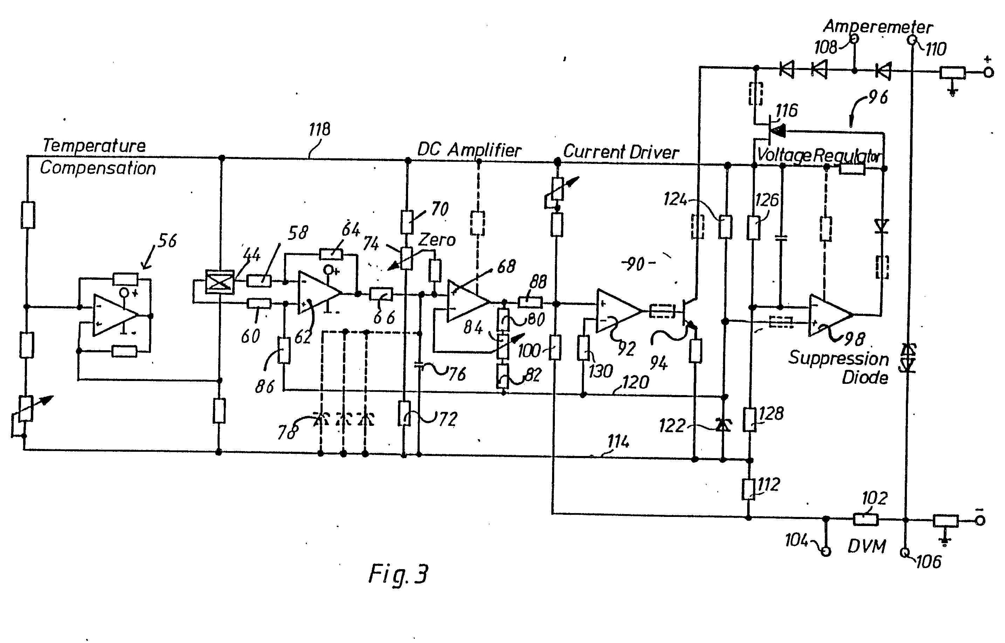

Fig. 2 is a schematic illustration of the measuring transducer.

Numeral 132 in Fig. 2 designates the float, which is suspended from the lever 134 in a container. The lever is attached radially to the rotatably mounted shaft or rod 136. Any displacement of the float 132 causes the rod 136 to rotate. A radial arm 138 is attached to the rod 136. The arm 138 carries a u-shaped yoke as a holder 140 for permanent magnet means. The two legs of the yoke, which extend axially, carry one permanent magnet each 142 and 144, respectively. The relative arrangement of the permanent magnets 142 and 144 is illustrated in Fig. 4, which is a view from the right in Fig. 2. The permanent magnets 142 and 144 are secured to the holder 140 and spaced to define an air gap 146 therebetween. The arrangement of the permanent magnets 142, 144 is such that, at a first end (on the lefthand side in Fig. 4) the North pole of one permanent magnet 142 is opposite to the South pole of the other permanent magnet 144, and at a second end (on the righthand side in Fig. 4) the South pole of said one permanent magnet 142 is opposite to the North pole of said other permanent magnet 144. The permanent magnet means are arranged to be moved over the Hall generator 148 with their air gap 146 defined between the permanent magnets 142, 144, when the rod 136 is rotated and thus the arm 138 is pivoted. The movement is in the direction of the double arrow s in Fig. 4, i.e. in the direction from said first end to said second end or vice versa. Then a flux density B as a function of displacement s as shown in Fig. 5 results at the location of the Hall generator. It will be noted that this function is very well linear in a rather large range between the dashed lined. In the centre, the flux density is zero. Relatively high flux densities and thus relatively high signals at the Hall generator are achieved as compared to arrangements with one single magnet. Because of the increased signals, temperature-dependent zero drift of the Hall generator has less weight. The signal processing means for processing the Hall generator signal are arranged in a tightly sealed housing 150. The Hall generator 148 is located in a non-magnetic wall portion 152 of the housing 150. The non-magnetic wall portion 152 forms a hollow body 154 protruding outwards from the wall of the sealed housing, the Hall generator 148 being arranged in said hollow body. This protruding hollow body 154 extends into the air gap 146 of the permanent magnet means described.

The wiring diagram of the Hall generator 148 and of the signal processing means will now be described with reference to Fig. 3.

As illustrated in Fig. 3, the circuit arrangement contains the Hall generator 44. The current flowing through the Hall generator 44 is compensated for temperature variations by means of a temperature compensation circuit 56. A Hall voltage is generated across the Hall generator and is applied to the two inputs of an operational amplifier through resistors 58, 60. A negative feedback from the output of the operational amplifier 62 to its inverting input is effected through a resistor 64.

The output signal of the operational amplifier 62 is applied to the non-inverting input of an operational amplifier 68 through a resistor 66. In addition, a balancing voltage for the zero balance, which is derived from the supply voltage by means of a voltage divider having fixed resistors 70, 72 and a potentiometer 74, is applied to this non-inverting input. Furthermore, a capacitor 76 is connected to the non-inverting input of the operational amplifier 68, to which capacitor Zener diodes 78 are connected in parallel.

The output of the operational amplifier 68 is fed back to the inverting input of the operational amplifier 68 through a voltage divider having fixed resistors 80, 82 and a potentiometer 84.

Furthermore the output from the operational amplifier 68 is connected through a resistor 88 and through the resistors 100 and 102 to the negative voltage source terminal (−). An output voltage is tapped across resistor 102 through terminals 104, 106 and is supplied, for example, to a digital voltmeter for display of level.

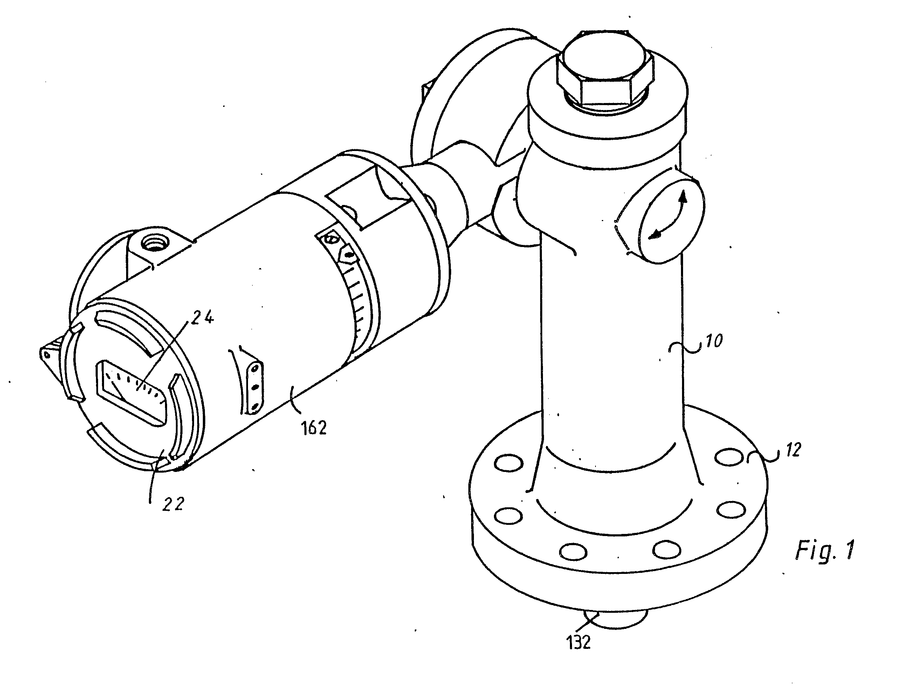

The output of the operational amplifier 68 through a resistor 88 controls a driver 90 comprising an operational amplifier 92 and a transistor 94. The driver 90 feeds an ammeter serving as the indicating instrument 24 of Fig. 1.

Numeral 96 designates a conventional voltage regulator.

A voltage source is connected to terminals "+" and "−". The negative voltage source terminal "−" is connected to a conductor 114 through a resistor 112. The positive voltage source terminal "+" is connected to a conductor 118 through a screened cable, diodes and a FET 116 serving as controllable impedance. A conductor 120 is connected to conductor 114 through a Zener diode 122 and to conductor 118 through a resistor 124. The Zener diode 122 provides a reference voltage at a non-inverting input of a control amplifier 98.

The inverting input of the control amplifier 98 has applied thereto a partial voltage of the voltage between conductors 118 and 114, said partial voltage being tapped from a voltage divider with resistors 126, 128. The output voltage of the control amplifier 98 controls the FET 116. When the voltage between conductors 118 and 114 deviates from a setpoint, the partial voltage from the voltage divider 126, 128 will deviate from the reference voltage provided by the Zener diode 122. Thereby the impedance of the FET 116 is changed. In this way, the voltage between the conductors 118 and 114 is kept at a constant value. The circuits of the operational amplifiers 62, 68 and 92 are connected between the conductors 118 and 120. As the voltage between the conductors 114 and 118 is kept constant and the voltage drop across the Zener diode 122 is also constant, also the voltage between conductors 120 and 118 is maintained at a constant value. The non-inverting input of the operational amplifier 62 is connected to the conductor 120 through a resistor 86. The output of the operational amplifier 68 is connected to the conductor 120 through the voltage divider 80, 84, 82. Furthermore the inverting input of the operational amplifier 92 is connected to the conductor 120 through a resistor 130.

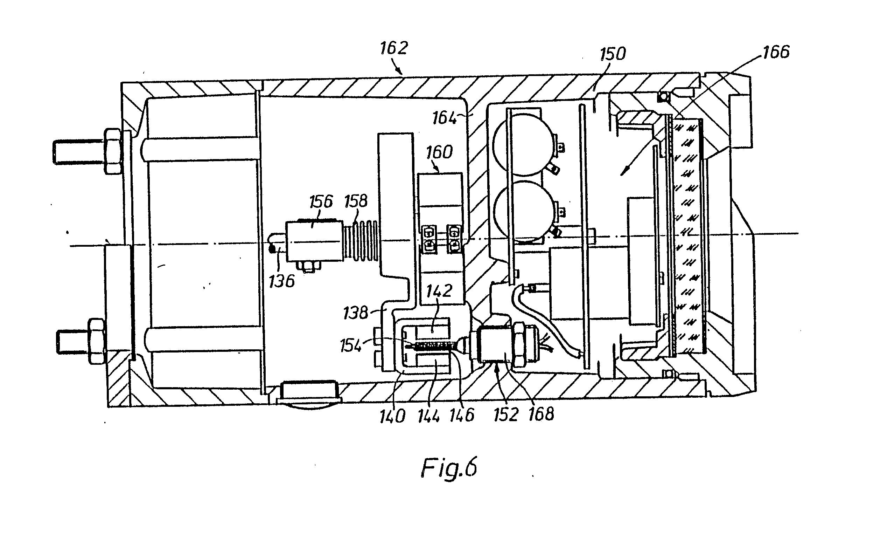

Figs. 6 to 8 show the constructional details of the transducer.

The motion is transmitted out of the container, in which the level is to be measured by means of a torsion tube, which permits rotary motion of the rod 136. A block 156 is attached to the rod 136. The block 156 is connected to the hub of arm 138 through a bellows 158. The arm 138 is mounted for limited rotation, for example through a leaf spring assembly 160. The bellows 158 is substantially torsionally rigid and therefore transmits rotary movements. It permits, however, compensation for axial tolerances and misalignment.

Numeral 162 designates a measuring transducer housing. The measuring transducer housing 162 is subdivided by a partition 164. The partition 164 and the portion of the measuring transducer housing at the righthand side thereof form the sealed housing 150 of Fig. 2, which contains the signal processing means 166.

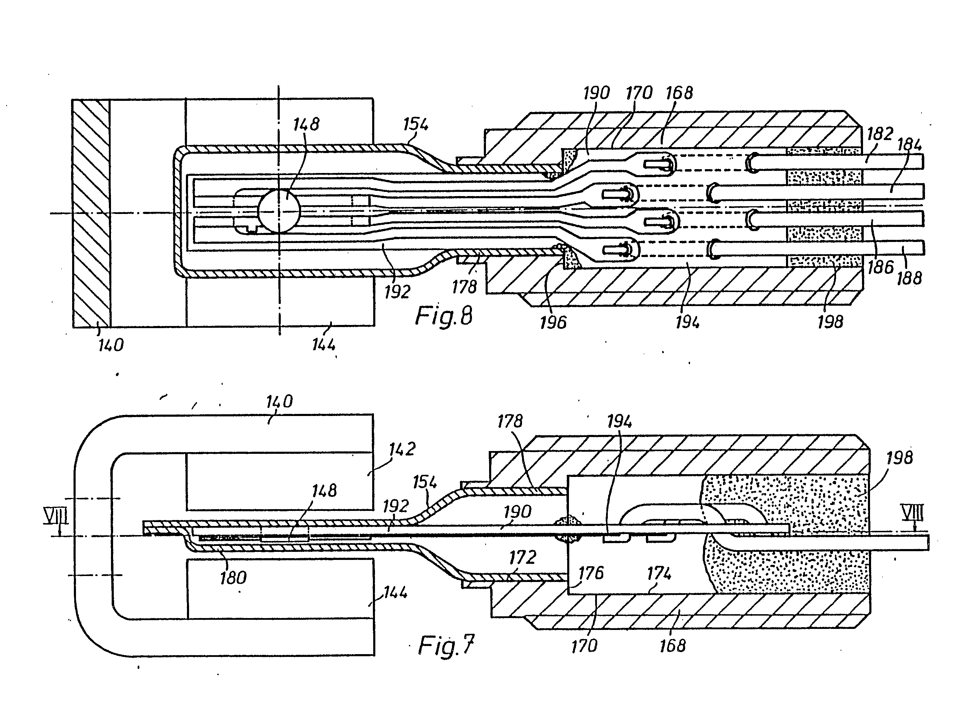

In Fig. 6 the arm 138 carries the permanent magnet means which have already been described with reference to Figs. 2 and 4. Corresponding elements bear the same reference numerals in Fig. 6 and in Figs. 2 and 4. The non-magnetic wall portion 152 is located in partition 164 and is described in greater detail with reference to Figs. 7 and 8.

As has been described already with reference to Fig. 2, the non-magnetic wall portion 152 comprises a hollow body 154 protruding axially outwardly from the wall 164 of the sealed housing, the Hall generator 148 being arranged in said hollow body. The hollow body 154 extends into the air gap 146 of the permanent magnet means. A threaded sleeve 168 having a stepped bore 170 is screwed into the wall 164 of the sealed housing 150. A relatively narrow section 172 of the bore 170 passes through the outer (with respect to the housing 150) end of the threaded sleeve 168 and forms a shoulder 176 with a relatively wide, inner section 174. The hollow body 154 has a substantially cylindrical neck portion 178 open towards the interior of the sealed housing 150, and a flattened, closed end 180. The cylindrical neck portion 178 of the hollow body 154 is inserted sealingly into the relatively narrow section 172. The Hall generator 148 with its connecting conductors 182, 184, 186, 188 is mounted on a flat carrier 190. The connecting conductors on the outer portion of the carrier are made by printed circuit technique. The Hall generator 148 with this flat carrier 190 is pushed into the flattened end 180 of the hollow body 154. The flat carrier 190 has a narrow front portion 192 carrying the Hall generator 148, and a wider, rear portion 194, steps 196 being formed on both sides between these portions. When the carrier 190 has been inserted into the threaded sleeve 168 and the hollow body 154, the steps 196 engage the shoulder 176 of the bore 170.

Thereby the Hall generator 148 assumes a well defined position within the hollow body 154. After the carrier 190 has been inserted, the relatively wide section 174 of the bore 170 is filled with some casting compound 198.

## Claims

1. Electrical level measuring transducer for generating a signal representing the liquid level inside a container, comprising

(a) a float (132) to be disposed in the interior of the container,

(b) means (134, 136, 138) for converting the upward thrust acting on the float into a movement,

(c) permanent magnet means (142, 144) arranged to be moved by the upward thrust converting means (134, 136, 138), and

(d) a Hall generator (148) disposed in the region of movement of the permanent magnet means (142, 144) for generating an electric signal indicative of said movement,

characterized in that

(e) a tightly closed housing (150) contains signal processing means for processing signals from said Hall generator (148),

(f) said housing (150) has a non-magnetic wall portion (152) which forms a hollow body (154) protruding outwards from the wall (164) of the housing (150),

(g) the Hall generator (148) is arranged in said hollow body (154),

(h) the permanent magnet means comprise an arrangement of a pair of permanent bar magnets (142, 144), which are secured to a holder (140) and spaced to define an air gap (146) therebetween, the arrangement being such that, at a first end, the North pole of one permanent magnet (142) is opposite to the South pole of the other permanent magnet (144) and, at a second end, the South pole of said one permanent magnet (142) is opposite to the North pole of the other permanent magnet (144), and

(i) the hollow body (154) and the Hall generator (148) arranged therein extend into the air gap (146) defined between the permanent magnets (142, 144), and the permanent magnet means are arranged to be moved over the hollow body (154) and Hall generator (148), the movement being in the direction from said first end to said second end or vice versa.

2. Electrical level measuring transducer as claimed in claim 1, characterized in that

(a) the hollow body (154) has a substantially cylindrical neck portion (178) open towards the interior of the sealed housing (150), and a flattened, closed end (180), and

(b) the Hall generator (148) with its connecting conductors (182, 184, 186, 188) is mounted on a flat carrier (190) which extends into the flattened end (180) of the hollow body (154).

3. Electrical level measuring transducer as claimed in claim 2, characterized in that

(a) a threaded sleeve (168) having an axially stepped bore (170) is screwed into the wall (164) of the sealed housing (150), a relatively narrow section (172) of the bore (170) passing through the outer end of the threaded sleeve (168) and forming a shoulder (176) with a relatively wide section (174) of the bore (170),

(b) the cylindrical neck portion (178) of the hollow body (154) is held sealingly in the relatively narrow section (172), and

(c) the flat carrier (190) has a narrow front portion (192) carrying the Hall generator (148) and a wider rear portion (194), steps (196) being formed on both sides between these portions, and, when the carrier (190) has been inserted into the threaded sleeve (168) and the hollow body (154), the steps (196) engage the shoulder (176) of the bore (170).

4. Electrical level measuring transducer as claimed in claim 3, characterized in that, after the carrier (190) has been inserted, the relatively wide section (174) of the bore (170) is filled with some casting compound (198).

## Patentansprüche

1. Elektrischer Meßumformer für Füllstand zur Erzeugung eines Signals, das den Füllstand im Inneren eines Behälter wiedergibt, enthaltend

(a) ein Schwimmer (132), der im Inneren des Behälters angeordnet ist,

(b) Mittel (134, 136, 138) zur Umsetzung des auf den Schwimmer wirkenden Auftriebs in eine Bewegung,

(c) Dauermagnetmittel (142, 144), die durch die Auftriebumsetzmittel (134, 136, 138) bewegbar sind, und

(d) ein Hall-Generator (148), der im Bewegungsbereich der Dauermagnetmittel (142, 144) zur Erzeugung eines die Bewegung wiedergebenden elektrischen Signals angeordnet ist,

dadurch gekennzeichnet, daß

(e) ein dicht abgeschlossenes Gehäuse (150) Signalverarbeitungsmittel zur Verarbeitung von Signale des Hall-Generators (148) enthält,

(f) das Gehäuse (150) einen unmagnetischen Wandteil (152) aufweist, der einen gegenüber der Wandung (164) des Gehäuses (150) nach außen vorstehenden Hohlkörper (154) bildet,

(g) der Hall-Generator (148) in dem Hohlkörper (154) angeordnet ist,

(h) die Dauermagnetmittel ein Paar von Dauermagneten (142, 144) enthalten, die im Abstand von einander unter Bildung eines Luftspalts (146) an einem Halter (140) so angebracht sind, daß an einem ersten Ende der Nordpol des einen Dauermagneten (142) dem Südpol des anderen Dauermagneten (144) gegenüberliegt und an einem zweiten Ende der Südpol des einen Dauermagneten (142) dem Nordpol des anderen Dauermagneten (144) gegenüberliegt, und

(i) der Hohlkörper (154) und der darin angeordnete Hall-Generator (148) sich in den zwischen den Dauermagneten (142, 144) gebildeten Luftspalt (146) erstrecken, und die Dauermagnetmittel über den Hohlkörper (154) und den Hall-Generator (148) bewegbar sind, wobei die Bewegung in Richtung vom ersten Ende zum zweiten Ende oder umgekehrt stattfindet.

2. Elektrischer Meßumformer nach Anspruch 1, dadurch gekennzeichnet, daß

(a) der Hohlkörper (154) einen im wesentlichen zylindrischen, zum Inneren des abgeschlossenen Gehäuses (150) offenen Hals (178) und ein abgeflachtes, geschlossenes Ende (180) aufweist, und

(b) der Hall-Generator (148) mit seinen Zuleitungen (182, 184, 186, 188) auf einem flachen Träger (190) angebracht ist, der sich in das abgeflachte Ende (180) des Hohlkörpers (154) erstreckt,

3. Elektrischer Meßumformer nach Anspruch 2, dadurch gekennzeichnet, daß

(a) eine Gewindehülse (168) mit einer axial gestuften Bohrung (170) in die Wandung (164) des abgeschlossenen Gehäuses (150) eingeschraubt ist, wobei ein engerer Abschnitt (172) der Bohrung (170) in dem äußeren Ende der Gewindehülse (168) verläuft und mit einem erweiterten Abschnitt (174) der Bohrung (170) eine Schulter (176) bildet,

(b) der zylindrische Hals (178) des Hohlkörpers (154) abdichtend in dem engeren Abschnitt (172) gehalten ist, und

(c) der flache Träger (190) einen schmaleren, den Hall-Generator (148) tragenden Vorderteil (192) und einen breiteren rückwärtigen Teil (194) aufweist, zwischen denen auf beiden Seiten Stufen (196) gebildet sind, wobei sich nach Einschieben des Trägers (190) in die Gewindehülse (168) und den Hohlkörper (154) die Stufen (196) an die Schulter (176) der Bohrung (170) anliegen.

4. Elektrischer Meßumformer nach Anspruch 3, dadurch gekennzeichnet, daß der erweiterte Abschnitt (174) der Bohrung (170) nach Einsetzen des Trägers (190) mit einer Vergußmasse (198) vergossen ist.

**Revendications**

1. Convertisseur électrique de signaux de niveau déstiné à engendrer un signal qui représente le niveau dans l'intérieur d'un récipient, comprenant

(a) un flotteur (132) disposé à l'intérieur du récipient,

(b) des moyens (134, 136, 138) déstinés à convertir la force ascensionnelle agissant sur le flotteur en mouvement,

(c) des moyens d'aimant permanent (142, 144) qui sont déplacables par les moyens convertisseurs de force ascensionnelle (134, 136, 138), et

(d) un générateur Hall (148) qui est disposé dans le domaine de mouvement des moyens d'aimant permanent (142, 144) afin d'engendrer un signal électrique représentant le mouvement, caractérisé par le fait que

(e) un boitier étanchement fermé (150) comprend des moyens de traitement de signal déstinés à traiter des signaux du générateur Hall (148),

(f) le boitier (150) présente un élément de paroi non-magnétique (152) qui forme un corps creux (154) s'étendant vers l'extérieur par rapport à la paroi (164) du boitier (150),

(g) le générateur Hall (148) est disposé dans le corps creux (154),

(h) les moyens d'aimant permanent comprennent une paire d'aimants permanents (142, 144) éspacés et disposés sur un support (140) en formant un entrefer (146) de sorte qu'à une première extrémité le pôle nord de l'un des aimants permanents (142) est en face du pôle sud de l'autre aimant permanent (144), et qu'à une deuxième extrémité le pôle sud de l'aimant permanent (142) est en face du pôle nord de l'autre aimant permanent (144), et

(i) le corps creux (154) et le générateur Hall (148) disposé dans celui-là s'étendent dans l'entrefer (146) formé entre les aimants permanents (142, 144), et les moyens d'aimant permanent sont déplacables au-delà du corps creux et le générateur Hall (148), le mouvement étant effectué en direction de la première extrémité vers la deuxième extrémité ou inversement.

2. Convertisseur électrique de signaux selon la revendication 1, caractérisé par le fait que

(a) le corps creux (154) présente un cou (178) essentiellement cylindrique et ouvert vers l'intérieur du boitier fermé (150), et une extrémité fermée aplatie (180), et

(b) le générateur Hall (148) est disposé avec ces conduites d'alimentation (182, 184, 186, 188) sur un support plat (190) qui s'étend dans l'extrémité aplatie (180) du corps creux (154).

3. Convertisseur électrique de signaux selon la revendication 2, caractérisé par le fait que

(a) une douille filetée (168) ayant un alésage axialement gradué (170) est vissée dans la paroi (164) du boitier fermé (150), une section relativement étroite (172) de l'alésage (170) s'étend dans l'extrémité extérieure de la douille filetée (168), et forme un épaulement (176) avec une section relativement élargie (174) de l'alésage (170),

(b) le cou cylindrique (178) du corps creux (154) est tenu étanchement dans la section relativement étroite (172), et

(c) le support plat (190) présente un avant étroit (192) portant le générateur Hall (148) et un derrière élargi (194) entre lesquels des seuils (196) sont formés des deux côtés, les seuils étant appliqués à l'épaulement (176) de l'alésage (170) après l'introduction du support (190) dans la douille filetée (168) et le corps creux (154).

4. Convertisseur électrique de signaux selon la revendication 3, caractérisé par le fait que, après l'introduction du support (190), la section élargie (174) de l'alésage (170) est remplie d'une masse de compoundage (198).

Fig. 1

24

162

22

10

12

132

0 085 359

Fig.2

Fig.4

Fig.5

2

Amperemeter

Voltage Regulator

Suppression Diode

DVM

Current Driver

DC Amplifier

Zero

Temperature Compensation

Fig. 3

3

Fig.6

166 150 164 160 142 138 154 156 158 136 162 152 168 140 144 146

Fig.8

Fig.7

5